# EUROPEAN PATENT SPECIFICATION

(11) **EP 3 363 917 B1**
(45) Date of publication and mention of the grant of the patent: **15.04.2020**
(21) Application number: 16855589.4
(22) Date of filing: 12.05.2016
(51) Int. Cl.: C21D 6/00, C21D 9/46, C22C 38/02, C22C 38/04, C22C 38/06, C22C 38/28, C22C 38/32, C22C 38/60, C21D 1/40, C21D 1/42, C21D 1/19, C23C 2/06, C23C 2/40, C23C 2/28, C22C 38/00

(54) **MANUFACTURING METHOD FOR HIGH STRENGTH STEEL SHEET**
HERSTELLUNGSVERFAHREN FÜR HOCHFESTE STAHLPLATTE
PROCÉDÉ DE FABRICATION D`UNE TÔLE D'ACIER À HAUTE RÉSISTANCE

(30) Priority: 16.10.2015 KR 20150144556
(43) Date of publication of application: 22.08.2018
(73) Proprietor: Samhwa Steel Co., Ltd., Busan 46905 (KR)
(72) Inventor: AHN, Soon Tae, Busan 46905 (KR)
(74) Representative: Gee, Steven William
(86) International application number: PCT/KR2016/004977
(87) International publication number: WO 2017/065371

(56) References cited:
- EP-A1- 2 128 295
- EP-A1- 2 465 962
- WO-A1-2014/185405
- JP-A- 2007 138 189
- JP-A- 2009 127 089
- JP-A- 2011 179 030
- JP-A- 2011 202 195
- KR-A- 20060 118 602
- KR-A- 20120 121 811
- KR-A- 20130 131 898
- KR-A- 20130 143 278
- KR-B1- 100 685 040
- US-A1- 2010 237 548

## Description

### Technical Field

The present invention relates to a method of manufacturing a high-strength steel sheet used mainly as a material for an automotive part. Specifically, the high-strength steel sheet has a tensile strength of 700-1,300 MPa and an elongation of 12% or more and is composed of a tempered martensite single phase structure.

### Background Art

In recent years, there is an international trend to tighten regulations on automotive fuel efficiency for high energy efficiency and atmospheric environment protection. Automobile manufacturers are therefore trying to improve fuel efficiency by attaining weight reduction through high strengthening of automotive steel sheets, but an automotive steel sheet having a strength value of about 600 MPa has been used until now.

Meanwhile, it has been known that an ultra-high strength steel sheet having a tensile strength of 780 MPa or more is needed for the safety in the seating space in automobiles, but high-strength steel sheets that have been developed and used so far have been used only for parts with simple shapes, such as a filler and a side sill, due to the limitation of moldability thereof caused by a low degree of elongation.

A dual-phase (DP) steel, a complex-phase (CP) steel, a transformation induced plasticity (TRIP) steel, and the like are known as existing representative high-strength steel sheets.

DP steel is a double-phase steel of ferrite-martensite in the metal structure, wherein the elongation is improved by controlling the fraction of ferrite with ductility, but stress is concentrated on an interface at the time of transformation, and thus a desirable degree of elongation is difficult to secure.

CP steel is a complex-phase steel, wherein a complex phase of martensite, bainite, ferrite, and residual austenite is formed through controlled cooling to achieve high strength, but sufficient elongation and uniform quality cannot be secured due to the difficulty of controlled cooling.

In addition, TRIP steel is a steel sheet that exhibits high strength and high ductility using transformation induced plasticity, but the martensite subjected to transformation-induced-plasticity has hardness, and thus is easy to act as a starting point of fracture at the time of processing, causing a limitation to the shape of a member to which the TRIP steel is to be applied.

Specific examples of such a conventional high-strength steel sheet with a complex phase may be shown in Korean Patent Nos. 10-1320242 and 10-1406478. The former discloses a microstructure steel sheet manufactured by hot-rolling a slab board formed of a plurality of alloying elements including 0.12-0.18% of carbon, followed by hot-dip galvanizing, and followed by alloying thermal treatment at about 500°C, wherein the microstructure steel sheet is composed of martensite having an area ratio of 50% or more and ferrite and remainder austenite and pearlite occupying the other area, and exhibits a maximum tensile strength of 1,150 MPa and a maximum elongation of 12%.

The latter discloses a microstructure steel sheet, which is composed of self-tempered martensite and bainite having an area ratio of 40-80%, ferrite having an area ratio of 7-20%, and the remainder martensite and obtained through controlled annealing of a slab board formed of a plurality of alloying elements including 0.05-0.15% of carbon, wherein the steel sheet has a maximum tensile strength of 1,100 MPa and a maximum elongation of 11%.

However, the microstructure of the steel sheets of the two patents have complex phases with respective predetermined fractions of elements, but not a single phase, and thus the thermal treatment process is difficult to control in order to obtain such a complex-phase microstructure, and as a result, there is a problem in securing a board having uniform quality characteristics. Moreover, the strength and elongation of the steel sheets of the two patents, which correspond to quality characteristics of high-strength steel sheets for an automobile, are somewhat improved compared with those of previous steel sheets, but the strength and elongation fail to meet characteristic values required for present or future automobiles.

European patent 2 128 295 discloses a high-strength hot dip zinc plated steel sheet with improved moldability and a method of manufacturing. The method comprises: {i} heating the steel sheet to 600°C or higher at a rate of 10°C/s or greater, {ii} further heating the steel sheet to 750°C or higher at a rate of 1∼10°C/s and then holding the heated steel sheet at that temperature for 30 seconds or more, {iii} cooling the steel sheet to a temperature of 350°C or lower at a rate of 10°C or greater, and {iv} heating the steel sheet to a temperature of 350°C ∼ 700°C and holding the steel sheet at that temperature for 1 second or more.

JP 2009 127089 describes a high strength cold rolled steel sheet with improved elongation and stretch-flangeability properties, with reduced anisotropy of elongation, and with better formability, which is suitable for automotive applications.

### Detailed Description of the Invention

### Technical Problem

The present invention has been made in view of the above-mentioned problems, and provides a method for manufacturing a high-strength steel sheet, the method comprising:
rapidly heating through high-frequency induction heating a material steel sheet to the Ac3 transformation point or higher and then holding the heated steel sheet for 3-30 seconds, the material steel sheet comprising:
   C: 0.08-0.30 wt%,
   Si: 0.01-2.0 wt%,
   Mn: 0.30-3.0 wt%,
   P: 0.05 wt% or less,
   S: 0.05 wt%,
   optional additional component(s) comprising one or more of:
      Cr: 0.05-2.0 wt%,
      Mo: 0.05-2.0 wt%,
      B: 0.0003-0.0050 wt%,
      Ti: 0.01-0.20 wt%,
      Al: 0.01-0.10 wt%,
and the balance Fe and unavoidable impurities;
rapidly cooling the steel sheet in a heated state at 100°C/s or more using water or oil;
tempering the steel sheet at a temperature of 500°C to the A1 transformation point for 3-30 seconds, including the time required for heating and holding;
cooling the heated steel sheet using water.

### Technical Solution

The present inventors analyzed the limitations of strength and/or elongation of conventional high-strength steel sheets for an automobile, found the fact that a single-phase structure that is preferably controllable in a metal structure is needed in order to allow the two mechanical characteristics to satisfy the requirements of a high-strength steel sheet for an automobile, and then conducted research and experiments in association with a chemical composition and a thermal treatment method, which allow such a single-phase structure to exhibit sufficiently high strength and elongation.

As a result, the present inventors discovered that the fact that a thermal treatment method in which rapid heating at a high temperature for a short time using high-frequency induction heating followed by rapid cooling is suitable to obtain a steel sheet composed of a tempered martensite single-phase structure exhibiting strength and elongation satisfying the requirements as a high-strength steel sheet for an automobile, and thus completed the present invention.

Specifically, it can be seen that a tempered martensite single-phase structure cannot be obtained by simply quenching and tempering a material steel sheet (hot-rolled or cold-rolled steel sheet), and all tempered martensite single phase structures cannot become steel sheets having a tensile strength of 700-1,300 MPa and an elongation of 12% or more.

In other words, the present inventors repeated various trials and experiments on the basis of the fact that even if the same tempered martensite structure is used, the tensile strength value varies depending on alloy elements contained therein and contents thereof; and another physical property value (especially, elongation) obtained under the same tensile strength is significantly different according to the quenching and tempering thermal treatment methods and conditions. As a result, the present inventors could confirm that when a material slab formed of alloying elements of a proper component system is hot-rolled and cold-rolled, and then subjected to quenching and tempering at properly controlled heating temperature, heating time, and cooling rate, a high-strength steel sheet with a tempered martensite single-phase metal structure having an elongation of 12% or more and a tensile strength of 700-1,200 MPa can be manufactured.

The steel sheet may additionally have a hot-dip galvanizing layer formed on a surface thereof.

The roles of respective alloying components in the chemical composition of the high-strength steel sheet and the reason for selecting the content ranges of the respective alloying components are as follows.

### C: 0.08-0.30 wt%

C is the most important element that is added so as to increase strength of a steel material at the time of quenching. If the content of C is 0.08 wt% or less, the hardness obtained after quenching is low, and thus the tempering temperature for obtaining a desired tensile strength of the present invention is lowered to 500°C or lower, failing to secure sufficient ductility. If the content of C exceeds 0.30 wt%, ductility is degraded and deformation resistance is increased due to the precipitation of a large amount of carbides, and thus there is a high possibility of occurrence of cracks when the steel sheet is processed into automotive parts.

### Si: 0.01-2.0 wt%

Si is an element that is added into steel for deoxidization and increases strength without degrading steel ductility. If the content of Si is 0.01 wt% or less, such an effect is insufficient. If the content of Si exceeds 2.0 wt%, precipitated carbides are increased and thus deformation resistance is increased, causing the occurrence of cracks and the decrease in tool lifetime at the time of processing of steel sheets. The reason is that Si is solubilized in the precipitated carbides to hinder the movement of carbon elements, thereby preventing the spheroidization of carbides.

### Mn: 0.30-3.0 wt%

Mn is an element that is useful for increasing a quenching property of steel to secure high strength. Mn is also an element that compensates the decrease in strength in low C- and Si-added steels, which avoid an increase in deformation resistance, which may occur when excessive C or Si is added. Although at least 0.30 wt% of Mn needs to be added in order to expect such an effect, the addition amount should not exceed 3.0 wt% since the excessive addition of Mn increases toughness and deformation resistance.

### Cr: 0.05-2.0 wt%

Cr is an element that is added to improve strength, quenching hardness, and toughness. If the content of Cr is less than 0.05 wt%, the improvement effects of such characteristics are insufficient. If the content of Cr exceeds 2.0 wt%, economic efficiency will be lowered since Cr is comparatively expensive.

### Mo: 0.05-2.0 wt%

The additional effects of Mo are almost the same as those of Cr. If the content of Mo is less than 0.05 wt%, the effects are insufficient. If the content of Mo exceeds 2.0 wt%, the deformation resistance for cold working is increased, and therefore, the added amount of Mo is restricted so as not to exceed 2.0 wt%.

### B: 0.0003-0.0050 wt%

B is an element that improves the quenching property. If the content of B is less than 0.0003 wt%, the effects of adding are unclear. If the content of B exceeds 0.0050 wt%, the quenching property deteriorates.

### Ti: 0.01-0.20 wt%

Ti has an effect of increasing quenching strength through coexistence with B, and also has a great effect in the refinement of austenite crystal grains. However, if the content of Ti is less than 0.01 wt%, such effects are insufficient. If the content of Ti exceeds 0.20 wt%, a large amount of inclusions are generated and thus various required physical property values are lowered.

### Al: 0.01-0.10 wt%

Al has an effect of inhibiting the growth of austenite crystal grains by combining with nitrogen. However, excessive aluminum induces the generation of a large amount of aluminum oxide-based inclusions, causing deterioration in ductility. Therefore, a range of 0.01-0.10 wt% is preferable in order to attain the purpose of the present invention.

### P, S: 0.05 wt% or less

P and S are unavoidable impurity elements of steel. P and S are segregated at crystal grain boundaries at the time of tempering, lowering impact toughness and decreasing the deformation ratio during cold working. Therefore, it is necessary to restrict the contents thereof to not exceeding 0.05 wt% if possible.

As the material steel sheet used in the present invention, a board obtained by hot rolling a slab having the above chemical composition and then cold-rolling the slab into a predetermined thickness is used. Here, the conditions and methods for hot rolling are not important. That is, even if the material steel sheet is rolled under any conditions, subsequent rapid heating and rapid cooling under the conditions of the present invention give a desired new metal structure, and thus the conditions for hot rolling do not need to be limited. For the above reason, cold rolling also does not require special conditions and may be applied only for the purpose of making beautiful surfaces or increasing dimensional precision, and if necessary, may be omitted for a reduction in manufacturing costs. Typically, hot rolling is carried out to a thickness of 3-4 mm and cold rolling after the hot rolling is carried out to a thickness of 1-2 mm. If necessary, the hot rolling may be carried out to a thickness of 1-2 mm to reduce costs.

The rapid heating and holding step is a process for obtaining a high tensile strength even when the alloying elements are reduced by refining austenite crystal grains. The rapid heating is carried out through a high-frequency induction heating device. If the time for such rapid heating is less than 3 seconds, heating is insufficient, resulting in multi-phase structures of untransformed ferrite, pearlite and austenite. If the time were to exceed 60 seconds, austenite crystal grains become too coarse, affecting brittleness.

The step for carrying out rapid cooling at 100°C/s or more follows the step for rapid heating and holding. The reason why such a rapid cooling process is carried out is that a complex-phase structure of ferrite, bainite, and martensite may be generated at a cooling rate of 100°C/s or less, and thus a desired degree of martensite single phase cannot be obtained.

Next, a high-temperature tempering process at 500°C to the A1 transformation point is carried out as another core process in the manufacturing method for a high-strength steel sheet. At the time of tempering, heating at 500°C or higher leads to the spheroidization of precipitated carbides and significant reductions in stress and potential remaining inside the carbides, thereby remarkably decreasing the occurrence of cracking at the time of cold working, such as pressing. However, if heating is carried out such that the tempering temperature exceeds the A1 transformation point, austenite is precipitated, and thus there is a possibility that a mixed structure of martensite and tempered martensite is formed after cooling, failing to obtain a single phase of uniform tempered martensite. Therefore, the tempering temperature is within a temperature range between 500°C and the A1 transformation point.

Meanwhile, the tempering effect is insufficient when the heating time is less than 3 seconds, and the precipitated carbides become coarse to cause a deterioration in strength if the heating time were to exceed 60 seconds.

After the tempering step, a process for cold-skin passing the tempered steel sheet at a reduction ratio of 10% or less may be additionally carried out. Such a cold-skin passing process, like the cold-rolling process that may be optionally carried out after hot rolling, is carried out for the purpose of obtaining a steel sheet with a beautiful surface, and a reduction ratio of 5% or less is more preferable.

Furthermore, a hot-dip galvanizing treatment or an alloying treatment following a hot-dip galvanizing treatment may be additionally carried out on the steel sheet obtained through the foregoing manufacturing method.

The hot-dip galvanizing treatment is carried out by a usual method, and thus the temperature of the hot-dip galvanizing bath in which a steel sheet is deposited is preferably 400-500°C. In addition, the alloying treatment after hot-dip galvanizing treatment is carried out on a consecutive hot-dip galvanizing line, and here, the temperature is about 400-600°C. However, if the temperature of the hot-dip galvanizing bath or the temperature for alloying thermal treatment exceeds the tempering temperature, the tensile strength may be lowered, and thus, temperature of the hot-dip galvanizing bath or the temperature for alloying thermal treatment needs to be restricted to the tempering temperature or lower.

As a result of numerous experiments conducted by the method according to the present invention, it was found that the tensile strength range of the steel sheet, which has a single phase of tempered martensite through the foregoing chemical composition and can stably obtain a desired elongation of 12% or more, is 700-1,300 MPa.

A tempered martensite single-phase structure with a tensile strength of 700-1,300 MPa and an elongation of 12% or more cannot be obtained by simply quenching and tempering a steel sheet, and as described above, corresponds to the results obtained by organically combining respective characteristic components: a proper chemical composition of a material steel sheet; refining crystal grains through rapid heating; and securing sufficient ductility through high-temperature tempering.

In order to achieve rapid heating and rapid cooling, quenching and tempering are implemented using a high-frequency induction heating device connected in a series of processes. Besides, even when a resistance heating device is used for the tempering stage, there is no difference in products as long as the thermal treatment conditions of the present invention are applied. Therefore, resistance heating in the tempering stage falls within the scope of claims of the present invention.

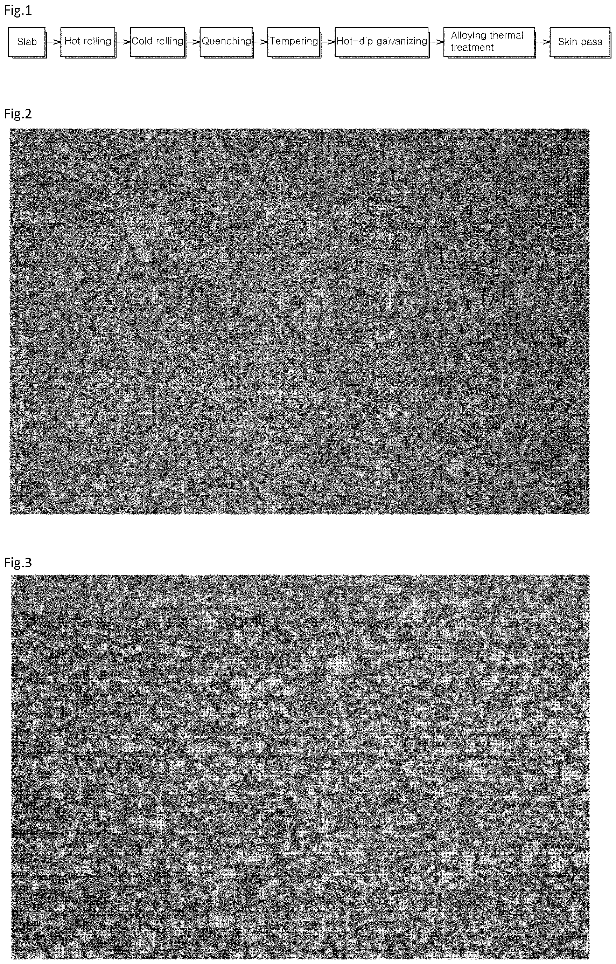

FIG. 1 schematically shows a manufacturing method for a high-strength steel sheet according to the present invention as described above.

### Advantageous Effects

The high-strength steel sheet made according to the method of the present invention has a tensile strength of 700-1,200 MPa and an elongation of 12% or more, and thus has an improved tensile strength compared with an existing automotive steel sheet. Therefore, the high-strength steel sheet can improve fuel efficiency due to a reduction of automotive body weight through a thickness reduction of a steel sheet for an automotive part, and can be utilized as a material for an automotive part with a complicated shape on the basis of a high elongation thereof.

In addition, the high-strength steel sheet is composed of only tempered martensite in a single phase but not a complex-phase structure in which multiple phases are mixed while a predetermined ratio of the multiple phases is maintained, and thus a thermal treatment process becomes much easier compared with a difficult controlled thermal treatment process that needs to be carried out to maintain the fractions of respective phases in the complex-phase structure, thereby lowering manufacturing costs, and thus easily obtaining a steel sheet with uniform quality.

### Brief Description of the Drawings

FIG. 1 is a schematic flow of the manufacturing process for a high-strength steel sheet according to the method of the present invention.
FIG. 2 is a structure enlarged image of a specimen according to an example of the present invention, showing a tempered martensite single phase structure.
FIG. 3 is an enlarged image showing a metal structure composed of two phases of ferrite and tempered martensite as a specimen according to a comparative example.

### Best Mode for Carrying Out the Invention

The specific manufacturing process including the purpose and technical features of the present invention will become more apparently understood through the following preferable examples of the present invention.

### (Example 1)

Each slab having a chemical composition shown in table 1 below was hot-rolled to a thickness of 2.8 mm and then cold-rolled, thereby obtaining a steel sheet with a thickness of 1.5 mm.

**[Table 1]**

| Chemical composition of specimen | | | | | | | | | | | |
|---|---|---|---|---|---|---|---|---|---|---|---|
| | C | Si | Mn | P | S | Cr | Mo | B | Al | Ti | Fe |
| Specimen 1 | 0.09 | 1.37 | 2.21 | 0.011 | 0.008 | - | - | - | 0.02 | - | bal. |
| Specimen 2 | 0.18 | 0.17 | 0.73 | 0.002 | 0.004 | 0.75 | - | 0.0025 | - | 0.03 | bal. |
| Specimen 3 | 0.22 | 0.09 | 0.89 | 0.004 | 0.005 | 0.91 | 0.20 | - | - | - | bal. |
| Specimen 4 | 0.28 | 0.25 | 0.85 | 0.013 | 0.008 | - | - | - | - | 0.02 | bal. |

The rolled steel sheet was subjected to quenching and tempering using a high-frequency induction heating device connected in a series of processes while the heating temperature, heating time, and cooling rate were changed into the conditions shown in table 2 below, thereby manufacturing steel sheet species.

A structure observation piece was collected from the steel sheet specimen and then subjected to natal etching, and the metal structure of the piece was observed by an optical microscope. The tensile strength and elongation among mechanical properties were measured with a universal material tester using a JIS 5 tensile test specimen. The measurement results are shown in table 2.

**[Table 2]**

| Thermal treatment conditions and mechanical characteristics of species | | | | | | | | | | | |
|---|---|---|---|---|---|---|---|---|---|---|---|
| | | Cold rolling (○, ×) | Quenching conditions | | | Tempering conditions | | | Metal structure | Tensile strength (MPa) | Elongation (%) |
| | | | Heating temperature (°C) | Heating, holding time (s) | Cooling rate (°C/s) | Heating temperature (°C) | Heating, holding time (s) | Cooling method | | | |
| Specimen 1 | Compartive example 1 | ○ | 910 | 8 | 300 | 430 | 8 | Water cooling | TM | 1110 | 10.1 |
| | Example 1 | ○ | 910 | 8 | 300 | 500 | 8 | Water cooling | TM | 995 | 13.8 |
| | Example 2 | ○ | 910 | 8 | 300 | 550 | 8 | Water cooling | TM | 943 | 15.6 |
| | Compartive example 2 | ○ | 910 | 8 | 80 | 550 | 8 | Water cooling | F+B+TM | 680 | 15.4 |
| | Example 3 | ○ | 910 | 8 | 300 | 630 | 8 | Water cooling | TM | 825 | 17.6 |
| | Example 4 | ○ | 910 | 8 | 300 | 690 | 8 | Water cooling | TM | 750 | 21.9 |
| Specimen 2 | Compartive example 3 | × | 790 | 15 | 300 | 520 | 12 | Water cooling | F+TM | 875 | 7.5 |
| | Compartive example 4 | × | 790 | 15 | 25 | 520 | 12 | Water cooling | F+B+TM | 830 | 11.1 |
| | Compartive example 5 | × | 880 | 15 | 50 | 520 | 12 | Water cooli ng | B+TM | 885 | 11.8 |
| | Example 5 | × | 880 | 15 | 150 | 520 | 12 | Water cooling | TM | 1040 | 15.3 |
| | Example 6 | × | 880 | 15 | 150 | 630 | 12 | Water cooling | TM | 932 | 18.7 |
| | Example 7 | × | 880 | 15 | 300 | 690 | 12 | Water cooling | TM | 805 | 21.2 |
| Specimen 3 | Compartive example 6 | ○ | 900 | 10 | 300 | 380 | 2 | Water cooling | M | 1450 | 5.1 |
| | Example 8 | ○ | 900 | 10 | 300 | 500 | 5 | Water cooling | TM | 1170 | 13.2 |
| | Example 9 | ○ | 900 | 10 | 300 | 630 | 15 | Water cooling | TM | 958 | 16.2 |
| | Example 10 | × | 900 | 10 | 300 | 630 | 15 | Water cooling | TM | 951 | 15.9 |
| | Example 11 | ○ | 900 | 10 | 300 | 695 | 20 | Water cooling | TM | 860 | 18.3 |
| | Compartive example 7 | ○ | 900 | 10 | 300 | 690 | 65 | Water cooling | TM | 680 | 23.2 |
| Specimen 4 | Compartive example 8 | ○ | 780 | 15 | 300 | 520 | 12 | Water cooling | F+TM | 943 | 6.8 |
| | Compartive example 9 | ○ | 780 | 15 | 25 | 520 | 12 | Water cooling | F+B+TM | 907 | 9.2 |
| | Compartive example 10 | ○ | 880 | 15 | 50 | 520 | 12 | Water cooling | B+TM | 965 | 9.9 |
| | Compartive example 11 | ○ | 880 | 15 | 150 | 400 | 12 | Water cooling | TM | 1465 | 8.9 |
| | Example 12 | ○ | 880 | 15 | 150 | 500 | 12 | Water cooling | TM | 1250 | 13.1 |
| | Example 13 | × | 880 | 15 | 300 | 650 | 12 | Water cooling | TM | 1030 | 14.9 |
| | Example 14 | ○ | 880 | 15 | 300 | 650 | 12 | Water cooling | TM | 1000 | 15.6 |
| | Compartive example 12 | ○ | 880 | 15 | 300 | 720 | 12 | Water cooling | M+TM | 1210 | 8.9 |

| | | | | | | | | | | | |
|---|---|---|---|---|---|---|---|---|---|---|---|
| * TM: tempered martensite, F: ferrite, M: martensite, B: bainite | | | | | | | | | | | |

As can be seen from table 2 above, when a steel sheet with a tempered martensite single-phase was manufactured by carrying out quenching and tempering processes through rapid heating and rapid cooling on a material steel sheet having the defined chemical composition according to the method of the present invention, the steel sheet stably exhibited an elongation of 12% or more even though the tensile strength of the steel sheet was high, 700-1,300 MPa.

It can be seen that even in the specimens having the same chemical composition, when the heating temperature before quenching was low (comparative example 3) or the cooling rate after heating was low (comparative example 2) so that multi-phase structures (F+TM, F+B+TM) besides tempered martensite are generated, the tensile strength was low (comparative example 2) or the elongation failed to reach a target value (comparative example 3) even in the same range of tensile strength.

It can be seen that even in the tempered martensite single phase, when the tempering heating temperature is lower than the tempering temperature range (500°C to A1 transformation point) according to the method of the present invention, the elongation falls short of a target value (12% or more) (comparative example 1), and when the tempering heating temperature exceeds the A1 transformation point on the contrary, the elongation was sharply lowered since martensite was precipitated at the time of cooling (comparative example 12).

Meanwhile, it was confirmed that even though heating was conducted for a short time of 3-60 seconds at the time of quenching and tempering using a high-frequency induction heating device as a heating unit, a tempered martensite structure having a high tensile strength of 700-1,300 MPa and a sufficient elongation of 12% or more could be obtained.

In addition, the manufacturing method of the present invention is economical in that a high-strength steel sheet having an elongation of 12% or more and a wide range of tensile strength, 700-1,300 MPa, can be manufactured through a single process that is relatively easy to control.

From the above results, the steel sheet having the required properties cannot be obtained by simply quenching and tempering a steel sheet, but can be finally obtained when a proper chemical composition of a material steel sheet, a proper thermal treatment device, and proper conditions for rapid heating and rapid cooling are organically combined through a series of processes.

## Claims

1. A method for manufacturing a high-strength steel sheet, the method comprising:
rapidly heating through high-frequency induction heating a material steel sheet to the Ac3 transformation point or higher and then holding the heated steel sheet for 3-30 seconds, the material steel sheet comprising:
C: 0.08-0.30 wt%,
Si: 0.01-2.0 wt%,
Mn: 0.30-3.0 wt%,
P: 0.05 wt% or less,
S: 0.05 wt%,
optional additional component(s) comprising one or more of:
Cr: 0.05-2.0 wt%,
Mo: 0.05-2.0 wt%,
B: 0.0003-0.0050 wt%,
Ti: 0.01-0.20 wt%,
Al: 0.01-0.10 wt%,
and the balance Fe and unavoidable impurities;
rapidly cooling the steel sheet in a heated state at 100°C/s or more using water or oil;
tempering the steel sheet at a temperature of 500°C to the A1 transformation point for 3-30 seconds, including the time required for heating and holding;
cooling the heated steel sheet using water.

2. The method of claim 1, wherein a hot-dip galvanizing layer is formed on a surface of the steel sheet by the addition of a plating layer forming step after the step of cooling the heated steel sheet using water.

3. The method of claim 2, wherein the steel sheet is reheated in an alloying thermal treatment step which is added following the plating layer forming step.

## Patentansprüche

1. Ein Verfahren zur Herstellung eines hochfesten Stahlblechs, wobei das Verfahren umfasst:
schnelles Erwärmen eines Materialstahlblechs durch Hochfrequenz-Induktionserwärmung bis zum Ac3-Umwandlungspunkt oder höher und anschließendes Halten des erwärmten Stahlblechs für 3-30 Sekunden, wobei das Material-Stahlblech umfasst:
C: 0,08-0,30 Gew.-%.
Si: 0,01-2,0 Gew.-%,
Mn: 0,30-3,0 Gew.-%,
P: 0,05 Gew.-% oder weniger,
S: 0,05 Gew.-%,
optionale zusätzliche Komponente(n), die eine oder mehrere von ihnen umfassen:
Cr: 0,05-2,0 Gew.-%,
Mo: 0,05-2,0 Gew.-%,
B: 0,0003-0,0050 Gew.-%,
Ti: 0,01-0,20 Gew.-%,
Al: 0,01-0,10 Gew.-%,
und der Rest Fe und unvermeidbare Verunreinigungen;
schnelle Abkühlung des Stahlblechs in erhitztem Zustand bei 100°C/s oder mehr mit Wasser oder Öl;
Anlassen des Stahlblechs bei einer Temperatur von 500°C bis zum Al-Umwandlungspunkt für 3 bis 30 Sekunden, einschließlich der für die Erwärmung und das Halten erforderlichen Zeit;
Abkühlung des erhitzten Stahlblechs mit Wasser.

2. Verfahren nach Anspruch 1, bei dem eine Feuerverzinkungsschicht auf einer Oberfläche des Stahlblechs durch die Zugabe eines Plattierungsschicht-Bildungsschritts nach dem Schritt des Abkühlens des erhitzten Stahlblechs mit Wasser gebildet wird.

3. Verfahren nach Anspruch 2, bei dem das Stahlblech in einem Legierungswärmebehandlungsschritt wieder erwärmt wird, der nach dem Schritt der Bildung der Plattierungsschicht hinzugefügt wird.

## Revendications

1. Un procédé de fabrication d'une tôle d'acier à haute résistance, le procédé comprenant:
le chauffage rapide par induction à haute fréquence d'une tôle d'acier au point de transformation Ac3 ou plus, puis le maintien de la tôle d'acier chauffée pendant 3 à 30 secondes, la tôle d'acier comprenant
C: 0,08-0,30 % en poids.
Si: 0,01-2,0 % en poids,
Mn: 0,30-3,0 % en poids,
P: 0,05 % en poids ou moins,
S: 0,05 % en poids,
un ou plusieurs éléments supplémentaires facultatifs comprenant un ou plusieurs des éléments suivants
Cr: 0,05-2,0 % en poids,
Mo: 0,05-2,0 % en poids,
B: 0,0003-0,0050 % en poids,
Ti: 0,01-0,20 % en poids,
Al: 0,01-0,10 % en poids,
et le reste en Fe et en impuretés inévitables;
le refroidissement rapide de la tôle d'acier à l'état chauffé à 100°C/s ou plus à l'aide d'eau ou d'huile;
la trempe de la tôle d'acier à une température de 500°C jusqu'au point de transformation de l'Ai pendant 3 à 30 secondes, y compris le temps nécessaire pour le chauffage et le maintien en température;
le refroidissement de la tôle d'acier chauffée à l'aide d'eau.

2. Procédé de la revendication 1, dans laquelle une couche de galvanisation par trempage à chaud est formée sur une surface de la tôle d'acier par l'ajout d'une étape de formation d'une couche de placage après l'étape de refroidissement de la tôle d'acier chauffée à l'aide d'eau.

3. Procédé de la revendication 2, dans laquelle la tôle d'acier est réchauffée dans une étape de traitement thermique d'alliage qui est ajoutée après l'étape de formation de la couche de placage.
